(19)

Europäisches Patentamt

European Patent Office

Office européen des brevets

(11) **EP 4 488 934 A1**

(12) **EUROPEAN PATENT APPLICATION**

(43) Date of publication:
**08.01.2025 Bulletin 2025/02**

(21) Application number: **24182647.8**

(22) Date of filing: **17.06.2024**

(51) International Patent Classification (IPC):
**G06T 7/00** *(2017.01)*

(52) Cooperative Patent Classification (CPC):
**B64D 39/00; B64D 47/08; G06T 7/73;**
G06T 2207/30252

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023 US 202318348022**

(71) Applicant: **The Boeing Company**
**Arlington, VA 22202 (US)**

(72) Inventors:
• **Latib, Tameez**
**Arlington, 22202 (US)**
• **Nguyen, Leon**
**Arlington, 22202 (US)**
• **Hung, Fan Hin**
**Arlington, 22202 (US)**
• **Smith, Haden**
**Arlington, 22202 (US)**
• **Khosla, Deepak**
**Arlington, 22202 (US)**
• **Hatcher, Justin**
**Arlington, 22202 (US)**
• **Chamberlain, Shawn**
**Arlington, 22202 (US)**

(74) Representative: **Arnold & Siedsma**
**Bezuidenhoutseweg 57**
**2594 AC The Hague (NL)**

(54) **DEFORMABLE 3D MODEL AND OPTIMIZATION FOR 6DOF POSE ESTIMATION OF INTRA-MODEL RECEIVER VARIATIONS FOR AERIAL REFUELING**

(57) Disclosed herein are methods, systems, and aircraft for performing image analysis for aiding refueling operations. A method includes a method includes receiving a two-dimensional (2D) image from a camera of a first device, determining 2D keypoints of a second device located within the 2D image based on a predefined point model of a generalized version of the second device, determining a 6 degree-of-freedom (6DOF) pose of the second device using the 2D keypoints, and outputting an estimated position of at least a component of the second device based on the 6DOF pose.

FIG. 1

EP 4 488 934 A1

**Description**

**FIELD**

This disclosure relates generally to aerial refueling, and more particularly to controlling aerial refueling operations.

**BACKGROUND**

Cameras provide information for aerial refueling operations. However, accurately and efficiently conducting a refueling operation using cameras can be difficult when practicing current techniques.

**SUMMARY**

The subject matter of the present application has been developed in response to the present state of the art, and in particular, in response to the shortcomings of conventional aerial refueling techniques, which have not yet been fully solved by currently available techniques. Accordingly, the subject matter of the present application has been developed to provide systems and methods for providing aerial refueling techniques that overcome at least some of the above-discussed shortcomings of prior art techniques.

The following is a non-exhaustive list of examples, which may or may not be claimed, of the subject matter, disclosed herein.

In one example, a method includes receiving a two-dimensional (2D) image from a camera of a first device, determining 2D keypoints of a second device located within the 2D image based on a predefined point model of a generalized version of the second device, determining a 6 degree-of-freedom (6DOF) pose, preferably of the second device, using the 2D keypoints, and outputting a position, preferably an estimated position, of (at least) a component of the second device based on the 6DOF pose.

Optionally, the predefined point model of the generalized version of the second device comprises semantic keypoints, preferably based on the predefined point model trained using singular value decomposition components found using model variations.

Optionally, determining the 6DOF pose comprises performing a perspective-n-point algorithm using the 2D keypoints to produce the 6DOF pose.

Optionally, determining the 6DOF pose further comprises determining re-projection error, preferably including determining an error value associated with re-projection of a result of the perspective n-point algorithm. Further preferably, determining re-projection error further comprises: identifying outlier 2D keypoints, and removing the outlier 2D keypoints.

Optionally, the method further comprises: tracking parameters of the second device and tracking the 6DOF pose to produce tracked parameters and tracked 6DOF pose values, and determining subsequent 6DOF pose based on the tracked parameters and tracked 6DOF pose values. Further preferably, the method comprises: after a predefined number of iterations, replacing determining the 6DOF pose using the 2D keypoints with determining the 6DOF pose based on the tracked parameters and the tracked 6DOF pose values. Additionally or alternatively, after a predefined number of iterations of determining 2D keypoints of the second device located within the 2D image based on the predefined point model of the generalized version of the second device, instead of determining the 6DOF pose using the 2D keypoints, the method includes determining the 6DOF pose based on the tracked parameters and the tracked 6DOF pose values.

In another example, a tanker aircraft includes a camera, a refueling boom, the camera configured to generate a 2D image of the refueling boom, a processor, and (preferably non-transitory) computer readable storage media storing code. The code being executable by the processor to perform operations comprising receiving the 2D image from the camera, determining 2D keypoints of a receiving aircraft located within the 2D image based on a predefined point model of a generalized version of the receiving aircraft, determining a 6DOF pose, preferably of the receiving aircraft, using the 2D keypoints, and outputting a position, such as an estimated position, of (at least) a component of the receiving aircraft based on the 6DOF pose. Preferably, the tanker aircraft comprises the refueling system of the below further example.

Optionally, the predefined point model of the generalized version of the receiving aircraft (202) comprises semantic keypoints, preferably based on the predefined point model trained using singular value decomposition components found using model variations.

Optionally, determining the 6DOF pose comprises performing a perspective-n-point algorithm using the 2D keypoints to produce the 6DOF pose.

Optionally, determining the 6DOF pose further comprises determining re-projection error, preferably including determining an error value associated with re-projection of a result of the perspective-n-point algorithm. Further preferably, determining re-projection error further comprises: identifying outlier 2D keypoints, and removing the outlier 2D keypoints.

Optionally, the processor is further configured to perform operations comprising: tracking parameters of the receiving aircraft and tracking the 6DOF pose to produce tracked parameters and tracked 6DOF pose values, and determining subsequent 6DOF pose based on the tracked parameters and tracked 6DOF pose values. Further preferably, the processor is further configured to perform operations comprising after a predefined number of iterations replacing determining the 6DOF pose using the 2D keypoints with determining the 6DOF pose based on the tracked parameters and the tracked 6DOF pose values. Additionally or alternatively, the processor is further configured to perform operations comprising after a predefined number of iterations of determining 2D keypoints of the receiving aircraft located within the 2D image based on the predefined point model of the generalized version of the receiving aircraft, instead of determining the 6DOF pose using the 2D keypoints, the processor is further configured to determine the 6DOF pose based on the tracked parameters and the tracked 6DOF pose values.

In still another example, a refueling system includes a processor and (preferably non-transitory) computer readable storage media storing code. The code being executable by the processor to perform operations comprising: receiving a 2D image from a camera, determining 2D keypoints of a receiving aircraft located within the 2D image based on a predefined point model of a generalized version of the receiving aircraft, determining a 6DOF pose, preferably of the receiving aircraft, using the 2D keypoints, and outputting a position, such as an estimated position, of (at least) a component of the receiving aircraft based on the 6DOF pose.

Optionally, the predefined point model of the generalized version of the receiving aircraft comprises semantic keypoints, preferably based on the predefined point model trained using singular value decomposition components found using model variations.

Optionally, determining the 6DOF pose comprises: performing a perspective-n-point algorithm using the 2D keypoints to produce the 6DOF pose, and determining re-projection error, preferably including determining an error value associated with re-projection of a result of the perspective-n-point algorithm. Further preferably, determining re-projection error further comprises: identifying outlier 2D keypoints, and removing the outlier 2D keypoints.

Optionally, the processor is further configured to perform operations comprising: tracking parameters of the receiving aircraft and tracking the 6DOF pose to produce tracked parameters and tracked 6DOF pose values, and determining subsequent 6DOF pose based on the tracked parameters and tracked 6DOF pose values. Further preferably, the processor is further configured to perform operations comprising after a predefined number of iterations replacing determining the 6DOF pose using the 2D keypoints with determining the 6DOF pose based on the tracked parameters and the tracked 6DOF pose values. Additionally or alternatively, the processor is further configured to perform operations comprising after a predefined number of iterations of determining 2D keypoints of the receiving aircraft located within the 2D image based on the predefined point model of the generalized version of the receiving aircraft, instead of determining the 6DOF pose using the 2D keypoints, the processor is further configured to determine the 6DOF pose based on the tracked parameters and the tracked 6DOF pose values.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims or may be learned by the practice of the subject matter as set forth hereinafter.

## BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:

Figure 1 is a schematic block diagram of a tanker aircraft with an automated refueling system, according to one or more examples of the present disclosure;

Figure 2 is a schematic, side elevation view of an aircraft refueling operation, according to one or more examples of the present disclosure;

Figure 3 is a camera view of a receiving aircraft during a refueling operation, according to one or more examples of the present disclosure;

Figure 4 is a side view of different versions of a receiver aircraft, according to one or more examples of the present disclosure;

Figure 5 is a schematic flow diagram of a system for optimizing image analysis for close quarter operations of vehicles, according to one or more examples of the present disclosure; and

Figure 6 is a schematic flow chart of a method of optimizing image analysis for close quarter operations of vehicles, according to one or more examples of the present disclosure.

## DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Disclosed herein are examples of a system that tracks 6 degrees-of-freedom (6DOF) of an object without a known object model based on semantic keypoints defined using a deformable model and using perspective-n-point (PnP) optimization over multiple timesteps. The tracked 6DOF information may be used for autonomous control purposes and/or visual guidance during close operations, such as, without limitation, an aerial refueling operation.

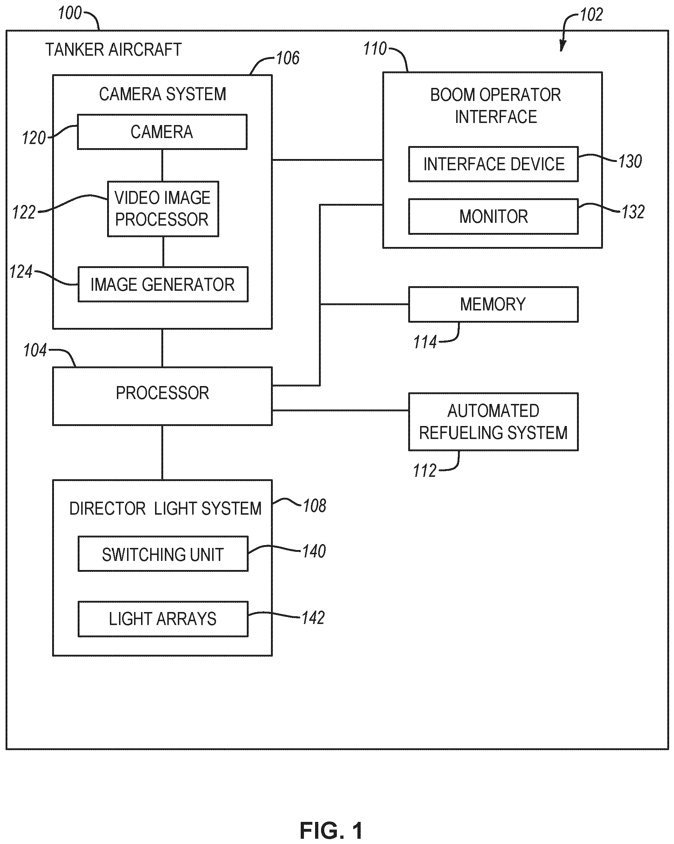

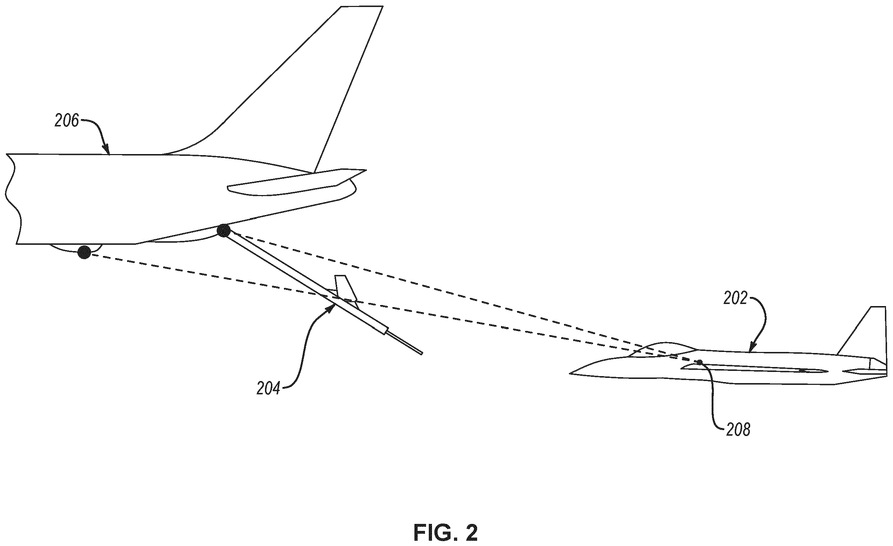

As shown in Figures 1 and 2, in various examples, a refueling system 102 includes a processor 104, a camera system 106, a director light system 108, a boom operator interface 110, an automated refueling system 112, and memory 114.

In various examples, the camera system 106 includes a camera 120, a video image processor 122, and an image generator 124. The camera 120 is mounted approximately to a fixed platform within a fared housing attached to a lower aft portion of the fuselage 206 of the tanker aircraft 100. The camera 120 includes a lens or lenses having remotely operated focus and zoom capability. The camera 120 is located in an aft position relative to and below the fuselage 206 of the tanker aircraft 100. The video image processor 122 receives digitized video images from the camera 120 and generates real-time 2D video images. The digitized video images include the objects viewed by the camera 120 (e.g., a receiver aircraft 202 and a refueling boom 204 of the tanker aircraft 100) within a vision cone. The image generator 124 then generates images for presentation on a monitor 132 of the boom operator interface 110.

The camera system 106 is configured to produce a two-dimensional (2D) image 300 of a three-dimensional (3D) space, including at least the refueling boom 204 of the tanker aircraft 100, in a deployed state, and the receiver aircraft 202 (see, e.g.,

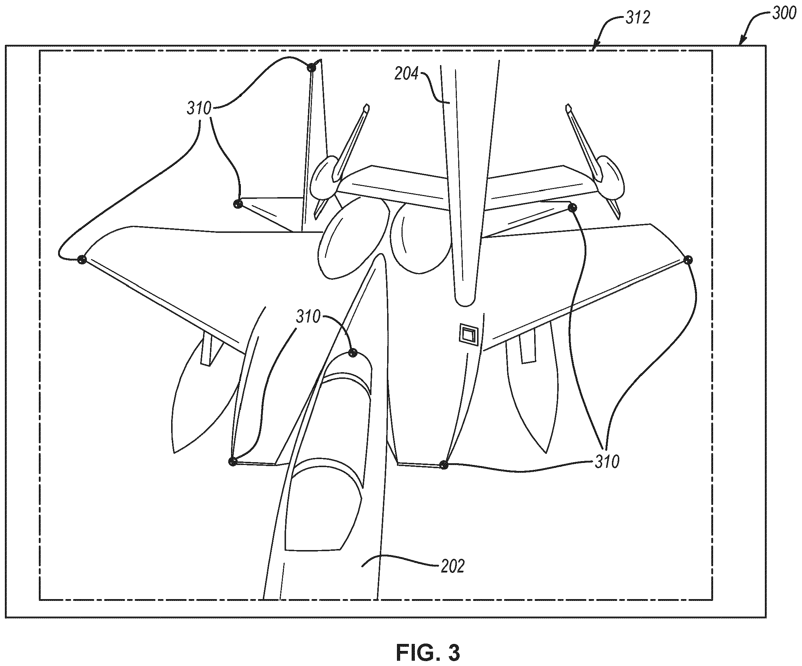

Figure 3). The 2D image 300 includes an approach and refueling zone into which the receiver aircraft 202 enters for refueling operations. The receiver aircraft 202 includes a boom nozzle receiver 208 capable of being coupled to the refueling boom 204 so that fuel from the tanker aircraft 100 can be transferred to the receiver aircraft 202 in an aerial refueling operation.

In various examples, the boom operator interface 110 includes a user interface device 130 and the monitor 132. Images presented on the monitor 132 are based on information provided by the processor 104. The director light system 108 includes a switching unit 140 and an array of lights 142 (i.e., pilot director lights). The switching unit 140 controls activation of the array of lights 142 based on information provided by the processor 104. The automated refueling system 112 controls operation of the refueling boom 204 and/or the tanker aircraft 100, to executing an aerial refueling operation, based on information provided by the processor 104.

It can be appreciated that refueling or close quarter operations may occur between vehicles other than aircraft. The refueling or close quarter operations may occur during adverse weather conditions. The vehicles may be any vehicles that move relative to each other (in water, on land, in air, or in space). The vehicles may also be manned or unmanned. Given by way of non-limiting example, in various examples, the vehicles are motor vehicles driven by wheels and/or tracks, such as, without limitation, an automobile, a truck, a cargo van, and the like. Given by way of further non-limiting examples, in various examples, the vehicles are marine vessels such as, without limitation, a boat, a ship, a submarine, a submersible, an autonomous underwater vehicle (AUV), and the like. Given by way of further non-limiting examples, in various examples, the vehicles are manned or unmanned aircraft such as, without limitation, a fixed wing aircraft, a rotary wing aircraft, and a lighter-than-air (LTA) craft.

In various examples, the array of lights 142 is located on the lower forward fuselage of the tanker aircraft 100. The array of lights 142 is positioned to be clearly viewable by the pilot of the receiver aircraft 202. Moreover, the array of lights 142 includes various lights for providing directional information to the pilot of the receiver aircraft 202. The array of lights 142 may include an approach light bar, an elevation light bar, a fore/aft position light bar, four longitudinal reflectors, two lateral reflectors, or other lights.

In various examples, (preferably non-transitory) computer readable instructions (i.e., code) stored in the memory 114 (i.e., storage media) cause the processor 104 to use raw image data from a single sensor (i.e., the camera 120) and make the raw data scalable and cost-effective to integrate into existing systems. In particular examples, the processor 104 predicts keypoints 310 (see, e.g., Figure 3) of the receiving aircraft 202 within the 2D image 300 using semantic keypoints as input (with an unknown model), and outputs estimates for 6DOF and shape parameters. Furthermore, the outputs are tracked for use in a subsequent prediction in the next timestep (i.e., iteration).

In various examples, prediction of the pose (i.e., the 6DOF, which include the position parameters x, y, z and the orientation parameters roll, pitch, yaw) is performed using arbitrary models given semantic keypoints as input. The actual model/shape is unknown, but an accurate 6DOF can be predicted from a set of keypoints that are semantically correct (i.e., keypoints between different models that still have the same meaning, such as a keypoint representing the head, wing, etc.). Further, the results of previous optimizations are used at the next timestep for improving performance of predicting 6DOF pose for the target object (e.g., the receiving aircraft 202).

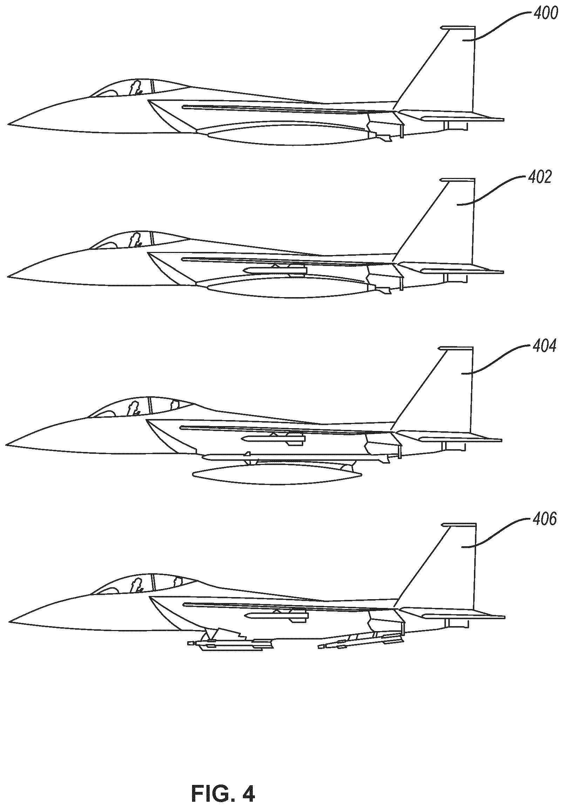

Referring to Figure 4, by way of example, an aircraft type can have multiple different variations (e.g., first aircraft variation 400, second aircraft variation 402, third aircraft variation 404, and fourth aircraft variation 406 each having a configuration that is different than the configurations of the other variations). In various examples, the refueling system 102 only uses a semantic keypoint model. The semantic keypoint model used by the refueling system 102 includes keypoints that would be common across all or most of the variations of an aircraft type.

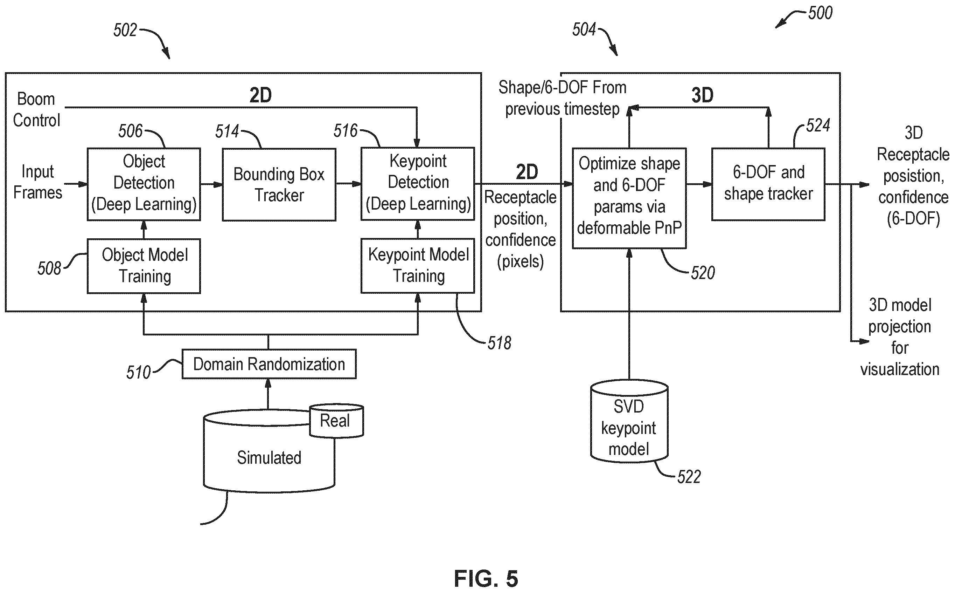

Referring to Figure 5, the processor 104 executes the instructions stored in the memory 114 to perform a process 500 that includes a 2D stage 502 and a 3D stage 504. The process 500 includes pre-processing steps (e.g., object model training 508 and keypoint model training 518) and runtime steps (shape-pose optimization 520 and shape-pose tracking 524). In the keypoint model training 518, singular value decomposition (SVD) components are found using a data matrix created by multiple CAD model variations and random scalings thereof. Each of the CAD model variations has a 2D (number of keypoints multiplied by 3 coordinates per keypoint) array of points, which is converted to a flat one-dimensional (1D) vector before being added to the data matrix. Then, a mean of all samples in the data matrix (i.e., a base model) is performed. The SVD is then computed based on the difference of the data matrix and the mean of the data matrix. The mean of the data matrix ($B_0$) and the SVD components ($B_i$) are used later in the shape-pose optimization 520. The mean of the data matrix ($B_0$) and the SVD components ($B_i$) are saved in storage 522.

The 2D stage 502 additionally includes object detection 506 which detects the receiving aircraft 202 from the raw image data received from the camera system 106. Detection of the receiving aircraft 202 during the object detection 506 utilizes a trained deep neural network from the object model training 508 that processes the input to output a bounding box around a region of interest of the receiving aircraft 202.

In various examples, the 2D stage 502 also includes a bounding box tracker 514. The bounding box tracker 514 causes the processor 104 to generate a bounding box (e.g., bounding box 312 in Figure 3) around an area of interest within the 2D image 300 produced by the camera 120. The area of interest is an area where the receiving aircraft 202 is most likely to be located based on where the camera 120 is pointing. The bounding box minimizes the amount of unnecessary features within the 2D image 300 that would be analyzed by the processor 104. The processor 104 estimates position and orientation of a 3D model of the receiving aircraft 202 in 3D space. The estimated 3D model is then projected onto a virtual camera image in 2D space to produce a projection of the receiving aircraft 202. Then, a bounding box is made around the pixels that contain the projection of the receiving aircraft 202. The bounding box includes a buffer so as to include more of the image in case the projected receiving aircraft 202 does not match the real world.

**Singular Value Decomposition (SVD)**

In some examples, the keypoint model training 518 determines the SVD components by initially starting with a few known models of variations of the receiving aircraft 202, keypoints are manually selected that are semantically similar (such as plane wing tips, nose, etc.) for each model, obtaining p x 3 keypoint data (where p is the number of keypoints, and 3 is for x, y, z coordinates of each keypoint) for each known model. Then, transformations, such as random scaling, are used to produce keypoint data of possible variations of the receiving aircraft 202. Given n samples (including known models and created variations), a data matrix Q of $n \times p \times 3$ is used. To apply SVD, the data matrix Q is flattened to an n x 3p matrix and the mean across n samples is determined. The mean is denoted by $B_0$, a $1 \times 3p$ vector which is reshaped to 3 x p. The SVD is a statistical model of all the samples in data matrix Q. Next, $Q - B_0$ is computed, which normalizes each of the n samples to be centered around $B_0$. Then, k SVD components corresponding to largest eigenvalues of $Q - B_0$ are determined. The k SVD components are labelled $B_1, ...B_k$, which are reshaped to 3 x p just like $B_0$. In other words, the keypoint sets from various receiver variations and various random scalings are gathered into a matrix. A statistical model is constructed to represent the various keypoint sets in the matrix using the SVD. The statistical model is a more succinct representation of the data matrix and the statistical model allows the keypoints to be parameterized, so that optimization can occur over these parameters to find the best-fitting keypoint set.

**Neural Network Keypoint Model Training**

During the keypoint model training 518, a neural network is trained to predict semantic keypoints across all variations of the receiver aircraft 202. The neural network is called a keypoint detector (e.g., associated with the keypoint detection 516). In this case, domain randomization 510 is used to achieve better results. Another neural network is used as an object detector during the object detection 506, which is trained on input images and bounding boxes. At runtime, the input image(s) from the camera system 106 is cropped by the object detector (the object detection 506), which is then fed into the keypoint detector (the keypoint detection 516). The object detector neural network associated with the object detection 506 predicts bounding boxes from the full-frame image coming from the camera system 106 to get a more localized image of the receiver aircraft to provide input to the keypoint detector during the keypoint detection 516.

A convolutional neural network (CNN) is used for the deep learning-based keypoint detector associated with the keypoint detection 516. The keypoint detector is trained on the input images using all the variations of keypoint sets previously created.

The shape-pose optimization 520 finds the 6DOF pose via an optimization process that minimizes re-projection error. Shape parameters ($c_i$) and 6DOF parameters (R, T) are optimized based on the mean and SVD components and the semantic keypoints calculated above. R equals range and T equals translational position. A random sample consensus (RANSAC) algorithm is used to find inlier keypoints.

Below is an example optimization function L that is minimized (over R, T, c):

$$L = \left\| proj_{3D \to 2D} \left( T + R \left( B_0 + \sum_{i=1}^{k} c_i B_i \right) \right) - x \right\|_{fro}^{2} + f(c)$$

where f is a regularization function, typically $l(c) = a\|c\|^2$ for some parameter alpha (i.e., a user chosen regularization hyperparameter), and x are the predicted 2D keypoints from keypoint detection 516. The optimization function performs deformable optimization loss using the following deformable model based on the SVD decomposition:

$$M_{deformable} = B_0 + \sum_{i=1}^{n} c_i B_i$$

To incorporate RANSAC, an inliers matrix D (that is diagonal with $D_{i,j} = 1$ if j is an inlier keypoint) is added to the optimization function L, namely:

$$L = \left\| \left( proj_{3D-2D} \left( T + R(B_0 + \sum_{i=1}^{k} c_i B_i) \right) - x \right) D \right\|_{fro}^{2} /trace + f_{RANSAC}(c)$$

where $f_{RANSAC}(c)$ may have a different alpha value for example.

During the shape-pose tracking 524, the process 500 tracks the shape parameters ($c_i$) and 6DOF to use in a next round of optimization. Because the process 500 is tracking the 6DOF of a single object moving in space, the previous 6DOF is a close guess as to where the actual object is located. Further, the object's shape should not change as it moves, except to achieve a tighter fit. At a predetermined number of iterations, optimization over shape parameters is stopped. Also, the shape-pose tracking 524 outputs a confidence value for the 6DOF pose or for a 6DOF pose for a feature (e.g., a nozzle receptacle of the receiving aircraft 202).

In various examples, the parameters R, T, c are tracked via a Kalman filter, and used as an initial guess in the optimization of the next frame (with different x). After some time, the c parameter is fixed, stopping optimization over the c parameter. In other words, once the shape of the tracked object is known, there is no longer a need to predict the shape, and the optimization function L is used to only minimize over R and T.

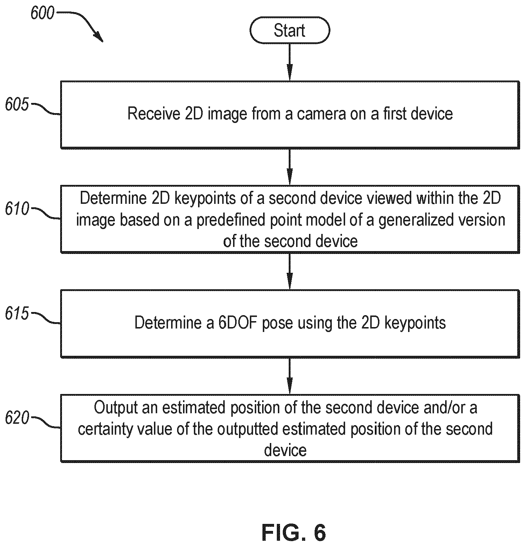

Referring to Figure 6, a method 600 includes outputting an estimated position of a second device relative to a first device and/or a certainty value of the outputted estimated position of the second object. Block 605 of the method 600 includes receiving a 2D image from a camera on a first device. Block 610 of the method 600 includes determining 2D keypoints of a second device viewed within the 2D image based on a predefined point model of a generalized version of the second device. Block 615 of the method 600 includes determining a 6DOF pose using the 2D keypoints. Block 620 of the method 600 includes outputting an estimated position of the receiving device.

The following is a non-exhaustive list of examples, which may or may not be claimed, of the subject matter, disclosed herein.

The following portion of this paragraph delineates example 1 of the subject matter, disclosed herein. According to example 1, a method includes receiving a 2D image from a camera of a first device, determining 2D keypoints of a second device located within the 2D image based on a predefined point model of a generalized version of the second device, determining a 6DOF pose of the second device using the 2D keypoints, and outputting an estimated position of at least a component of the second device based on the 6DOF pose.

The following portion of this paragraph delineates example 2 of the subject matter, disclosed herein. According to example 2, which encompasses example 1, above, the predefined point model of the generalized version of the second device comprises semantic keypoints.

The following portion of this paragraph delineates example 3 of the subject matter, disclosed herein. According to example 3, which encompasses examples 1 or 2, above, the method further comprises determining the 6DOF pose comprises performing a perspective-n-point algorithm using the 2D keypoints to produce the 6DOF pose.

The following portion of this paragraph delineates example 4 of the subject matter, disclosed herein. According to example 4, which encompasses any of examples 1-3, above, the method further comprises determining the 6DOF pose further comprises determining an error value associated with re-projection of a result of the perspective-n-point algorithm.

The following portion of this paragraph delineates example 5 of the subject matter, disclosed herein. According to example 5, which encompasses example 4, above, determining re-projection error comprises identifying outlier 2D keypoints and removing the outlier 2D keypoints.

The following portion of this paragraph delineates example 6 of the subject matter, disclosed herein. According to example 6, which encompasses any of examples 1-5, above, the method further comprises tracking parameters of the second device and tracking the 6DOF pose to produce tracked parameters and tracked 6DOF pose values; and determining subsequent 6DOF pose based on the tracked parameters and tracked 6DOF pose values.

The following portion of this paragraph delineates example 7 of the subject matter, disclosed herein. According to example 7, which encompasses example 6, above, the method further comprises after a predefined number of iterations of determining 2D keypoints of the second device located within the 2D image based on the predefined point model of the generalized version of the second device, instead of determining the 6DOF pose using the 2D keypoints, the method includes determining the 6DOF pose based on the tracked parameters and the tracked 6DOF pose values.

The following portion of this paragraph delineates example 8 of the subject matter, disclosed herein. According to example 8, a tanker aircraft comprises a camera, a refueling boom, the camera configured to generate a 2D image of the refueling boom, a processor, and (preferably non-transitory) computer readable storage media storing code. The code being executable by the processor to perform operations comprises receiving the 2D image from the camera, determining 2D keypoints of a receiving aircraft located within the 2D image based on a predefined point model of a generalized version of the receiving aircraft, determining a 6DOF pose of the receiving aircraft using the 2D keypoints, and outputting an estimated position of at least a component of the receiving aircraft based on the 6DOF pose.

The following portion of this paragraph delineates example 9 of the subject matter, disclosed herein. According to example 9, which encompasses example 8, above, the predefined point model of the generalized version of the receiving aircraft comprises semantic keypoints.

The following portion of this paragraph delineates example 10 of the subject matter, disclosed herein. According to example 10, which encompasses examples 8 or 9, above, determining the 6DOF pose comprises performing a perspective-n-point algorithm using the 2D keypoints to produce the 6DOF pose.

The following portion of this paragraph delineates example 11 of the subject matter, disclosed herein. According to example 11, which encompasses any of examples 8-10, above, determining the 6DOF pose further comprises determining an error value associated with re-projection of a result of the perspective-n-point algorithm.

The following portion of this paragraph delineates example 12 of the subject matter, disclosed herein. According to example 12, which encompasses example 11, above, determining re-projection error comprises identifying outlier 2D keypoints and removing the outlier 2D keypoints.

The following portion of this paragraph delineates example 13 of the subject matter, disclosed herein. According to example 13, which encompasses any of examples 8-12, above, the processor is further configured to perform operations comprising tracking parameters of the receiving aircraft and tracking the 6DOF pose to produce tracked parameters and tracked 6DOF pose values and determining subsequent 6DOF pose based on the tracked parameters and tracked 6DOF pose values.

The following portion of this paragraph delineates example 14 of the subject matter, disclosed herein. According to example 14, which encompasses example 13, above, the processor is further configured to perform operations comprising after a predefined number of iterations of determining 2D keypoints of the receiving aircraft located within the 2D image based on the predefined point model of the generalized version of the receiving aircraft, instead of determining the 6DOF pose using the 2D keypoints, the processor is further configured to determine the 6DOF pose based on the tracked parameters and the tracked 6DOF pose values

The following portion of this paragraph delineates example 15 of the subject matter, disclosed herein. According to example 15, a refueling system comprises a processor and (preferably non-transitory) computer readable storage media storing code. The code being executable by the processor to perform operations comprising receiving a 2D image from a camera, determining 2D keypoints of a receiving aircraft located within the 2D image based on a predefined point model of a generalized version of the receiving aircraft, determining a 6DOF pose of the receiving aircraft using the 2D keypoints, and outputting an estimated position of at least a component of the receiving aircraft based on the 6DOF pose.

The following portion of this paragraph delineates example 16 of the subject matter, disclosed herein. According to example 16, which encompasses example 15, above, the predefined point model of the generalized version of the second device comprises semantic keypoints.

The following portion of this paragraph delineates example 17 of the subject matter, disclosed herein. According to example 17, which encompasses example 15 or 16, above, determining the 6DOF pose comprises performing a perspective-n-point algorithm using the 2D keypoints to produce the 6DOF pose and determining an error value associated with re-projection of a result of the perspective-n-point algorithm.

The following portion of this paragraph delineates example 18 of the subject matter, disclosed herein. According to example 18, which encompasses example 17, above, determining re-projection error further comprises identifying outlier 2D keypoints and removing the outlier 2D keypoints.

The following portion of this paragraph delineates example 19 of the subject matter, disclosed herein. According to example 19, which encompasses any of examples 15-17, above, the processor is further configured to perform operations comprising tracking parameters of the receiving aircraft and tracking the 6DOF pose to produce tracked parameters and tracked 6DOF pose values and determining subsequent 6DOF pose based on the tracked parameters and tracked 6DOF pose values.

The following portion of this paragraph delineates example 20 of the subject matter, disclosed herein. According to example 20, which encompasses example 19, above, the processor is further configured to perform operations comprising after a predefined number of iterations of determining 2D keypoints of the receiving aircraft located within the 2D image based on the predefined point model of the generalized version of the receiving aircraft, instead of determining the 6DOF pose using the 2D keypoints, the processor is further configured to determine the 6DOF pose based on the tracked parameters and the tracked 6DOF pose values.

Those of skill in the art will appreciate that the various illustrative logical blocks, modules, circuits, and algorithm steps described in connection with the examples disclosed herein may be implemented as electronic hardware, computer software, or combinations of both. Some of the examples and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an example of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that examples described herein are merely exemplary implementations.

The various illustrative logical blocks, modules, and circuits described in connection with the examples disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an example of a system or a component may employ various integrated circuit components, e.g., memory elements, digital signal processing elements, logic elements, look-up tables, or the like, which may carry out a variety of functions under the control of one or more microprocessors or other control devices.

In the above description, certain terms may be used such as "up," "down," "upper," "lower," "horizontal," "vertical," "left," "right," "over," "under" and the like. These terms are used, where applicable, to provide some clarity of description when dealing with relative relationships. But these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other but having one or more additional elements between the coupled elements. Further, as used herein, securing one element to another element can include direct securing and indirect securing. Additionally, as used herein, "adjacent" does not necessarily denote contact. For example, one element can be adjacent to another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Those skilled in the art will recognize that at least a portion of the controllers, devices, units, and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term controller/processor, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of controller (e.g., at a first time), as a second type of controller (e.g., at a second time, which may in some instances coincide with, overlap, or follow a first time), and/or as a third type of controller (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first controller that has a first purpose, then a second controller that has a second purpose and then, a third controller that has a third purpose, and so on. The transition of a reconfigurable and/or controllable component may occur in as little as a few nanoseconds, or may occur over a period of minutes, hours, or days.

In some such examples, at the time the controller is configured to carry out the second purpose, the controller may no longer be capable of carrying out that first purpose until it is reconfigured. A controller may switch between configurations as different components/modules in as little as a few nanoseconds. A controller may reconfigure on-the-fly, e.g., the reconfiguration of a controller from a first controller into a second controller may occur just as the second controller is needed. A controller may reconfigure in stages, e.g., portions of a first controller that are no longer needed may reconfigure into the second controller even before the first controller has finished its operation. Such reconfigurations may occur automatically, or may occur through prompting by an external source, whether that source is another component, an instruction, a signal, a condition, an external stimulus, or similar.

For example, a central processing unit/processor or the like of a controller may, at various times, operate as a component/module for displaying graphics on a screen, a component/module for writing data to a storage medium, a component/module for receiving user input, and a component/module for multiplying two large prime numbers, by configuring its logical gates in accordance with its instructions. Such reconfiguration may be invisible to the naked eye, and in some examples may include activation, deactivation, and/or re-routing of various portions of the component, e.g., switches, logic gates, inputs, and/or outputs. Thus, in the examples found in the foregoing/following disclosure, if an example includes or recites multiple components/modules, the example includes the possibility that the same hardware may implement more than one of the recited components/modules, either contemporaneously or at discrete times or timings. The implementation of multiple components/modules, whether using more components/modules, fewer components/modules, or the same number of components/modules as the number of components/modules, is merely an implementation choice and does not generally affect the operation of the components/modules themselves. Accordingly, it should be understood that any recitation of multiple discrete components/modules in this disclosure includes implementations of those components/modules as any number of underlying components/modules, including, but not limited to, a single component/module that reconfigures itself over time to carry out the functions of multiple components/modules, and/or multiple components/modules that similarly reconfigure, and/or special purpose reconfigurable components/modules.

In some instances, one or more components may be referred to herein as "configured to," "configured by," "configurable to," "operable/operative to," "adapted/adaptable," "able to," "conformable/conformed to," etc. Those skilled in the art will recognize that such terms (for example "configured to") generally encompass active-state components and/or inactive-state components and/or standby-state components, unless context requires otherwise.

The foregoing detailed description has set forth various examples of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software (e.g., a high-level computer program serving as a hardware specification), firmware, or virtually any combination thereof, limited to patentable subject matter under 35 U.S.C. 41. In an example, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the examples disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, limited to patentable subject matter under 35 U.S.C. 41, and that designing the circuitry and/or writing the code for the software (e.g., a high-level computer program serving as a hardware specification) and or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

With respect to the appended claims, those skilled in the art will appreciate that recited operations therein may generally be performed in any order. Also, although various operational flows are presented in a sequence(s), it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise. The present subject matter may be embodied in other specific forms without departing from scope of the disclosure. The described examples are to be considered in all respects only as illustrative and not restrictive. All changes which come within the meaning of the claims are to be embraced within their scope.

**Claims**

1. A method comprising:

   receiving a two-dimensional, 2D, image (400) from a camera (120) of a first device (100);
   determining 2D keypoints (410) of a second device (202) located within the 2D image (400) based on a predefined point model of a generalized version of the second device (202);
   determining a 6 degree-of-freedom, 6DOF, pose using the 2D keypoints (410); and
   outputting a position of a component of the second device (202) based on the 6DOF pose.

2. The method of claim 1, wherein the predefined point model of the generalized version of the second device (202) comprises semantic keypoints.

3. The method of claim 1 or 2, wherein determining the 6DOF pose comprises performing a perspective-n-point algorithm using the 2D keypoints (410) to produce the 6DOF pose.

4. The method of any one of claims 1-3, wherein determining the 6DOF pose further comprises determining re-projection error, preferably wherein
   determining re-projection error further comprises:

   identifying outlier 2D keypoints (410); and
   removing the outlier 2D keypoints (410).

5. The method of any one of claims 1-4, further comprising:

   tracking parameters of the second device (202) and tracking the 6DOF pose to produce tracked parameters and tracked 6DOF pose values; and
   determining subsequent 6DOF pose based on the tracked parameters and tracked 6DOF pose values, preferably further comprising:
   after a predefined number of iterations, replacing determining the 6DOF pose using the 2D keypoints (410) with determining the 6DOF pose based on the tracked parameters and the tracked 6DOF pose values.

6. A tanker aircraft (100) comprising:

   a camera (120);

a refueling boom (204);
the camera (120) configured to generate a two-dimensional, 2D, image (400) of the refueling boom (204);
a processor (104); and
non-transitory computer readable storage media (114) storing code, the code being executable by the processor to perform operations comprising:

receiving the two-dimensional, 2D, image (400) from the camera (120);
determining 2D keypoints (410) of a receiving aircraft (202) located within the 2D image (400) based on a predefined point model of a generalized version of the receiving aircraft (202);
determining a 6 degree-of-freedom, 6DOF, pose using the 2D keypoints (410); and
outputting a position of a component of the receiving aircraft (202) based on the 6DOF pose.

7. The tanker aircraft (100) of claim 6, wherein:

the predefined point model of the generalized version of the receiving aircraft (202) comprises semantic keypoints; and/or
determining the 6DOF pose comprises performing a perspective-n-point algorithm using the 2D keypoints (410) to produce the 6DOF pose.

8. The tanker aircraft (100) of claim 6 or 7, wherein determining the 6DOF pose further comprises determining re-projection error, preferably wherein determining re-projection error further comprises:

identifying outlier 2D keypoints (410); and
removing the outlier 2D keypoints (410).

9. The tanker aircraft (100) of any one of claims 6-8, wherein the processor is further configured to perform operations comprising:

tracking parameters of the receiving aircraft (202) and tracking the 6DOF pose to produce tracked parameters and tracked 6DOF pose values; and
determining subsequent 6DOF pose based on the tracked parameters and tracked 6DOF pose values, preferably wherein:
the processor is further configured to perform operations comprising after a predefined number of iterations, replacing determining the 6DOF pose using the 2D keypoints (410) with determining the 6DOF pose based on the tracked parameters and the tracked 6DOF pose values.

10. A refueling system (102) comprising:

a processor (104); and
non-transitory computer readable storage media (114) storing code, the code being executable by the processor to perform operations comprising:

receiving a two-dimensional, 2D, image (400) from a camera (120);
determining 2D keypoints (410) of a receiving aircraft (202) located within the 2D image (400) based on a predefined point model of a generalized version of the receiving aircraft (202);
determining a 6 degree-of-freedom, 6DOF, pose using the 2D keypoints (410); and
outputting a position of a component of the receiving aircraft (202) based on the 6DOF pose.

11. The refueling system (102) of claim 10, wherein the predefined point model of the generalized version of the receiving aircraft (202) comprises semantic keypoints.

12. The refueling system (102) of claim 10 or 11, wherein determining the 6DOF pose comprises:

performing a perspective-n-point algorithm using the 2D keypoints (410) to produce the 6DOF pose; and
determining re-projection error.

13. The refueling system (102) of claim 12, wherein determining re-projection error further comprises:

identifying outlier 2D keypoints (410); and
removing the outlier 2D keypoints (410).

14. The refueling system (102) of any one of claims 10-13, wherein the processor is further configured to perform operations comprising:
tracking parameters of the receiving aircraft (202) and tracking the 6DOF pose to produce tracked parameters and tracked 6DOF pose values; and
determining subsequent 6DOF pose based on the tracked parameters and tracked 6DOF pose values.

15. The refueling system (102) of claim 14, wherein the processor is further configured to perform operations comprising after a predefined number of iterations, replacing determining the 6DOF pose using the 2D keypoints (410) with determining the 6DOF pose based on the tracked parameters and the tracked 6DOF pose values.

FIG. 1

FIG. 2

**FIG. 3**

400

402

404

406

FIG. 4

**FIG. 5**

**FIG. 6**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 024 340 A1 (BOEING CO [US]) 6 July 2022 (2022-07-06) | 1-4,6-8, 10-13 | INV. G06T7/00 |
| Y | * abstract; figure all * * paragraphs [0004], [0018], [0040], [0024] - [0027] * | 5,9,14, 15 | |
| Y | US 2022/212811 A1 (KHOSLA DEEPAK [US] ET AL) 7 July 2022 (2022-07-07) * abstract; figure all * * paragraphs [0032], [0065] * | 5,9,14, 15 | |

TECHNICAL FIELDS
SEARCHED (IPC)

B64D
G06T

The present search report has been drawn up for all claims

| Place of search | Date of completion of the search | Examiner |
|---|---|---|
| The Hague | 14 October 2024 | Winne, Dominique |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

EP 4 488 934 A1

**ANNEX TO THE EUROPEAN SEARCH REPORT
ON EUROPEAN PATENT APPLICATION NO.**

EP 24 18 2647

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | | Publication date | Patent family member(s) | | Publication date |
|---|---|---|---|---|---|
| EP 4024340 | A1 | 06-07-2022 | CA | 3142750 A1 | 04-07-2022 |
| | | | CN | 114720995 A | 08-07-2022 |
| | | | EP | 4024340 A1 | 06-07-2022 |
| | | | JP | 2022105491 A | 14-07-2022 |
| | | | US | 2022215571 A1 | 07-07-2022 |
| US 2022212811 | A1 | 07-07-2022 | CA | 3136258 A1 | 05-07-2022 |
| | | | CN | 114719868 A | 08-07-2022 |
| | | | EP | 4024346 A1 | 06-07-2022 |
| | | | JP | 2022106671 A | 20-07-2022 |
| | | | US | 2022212811 A1 | 07-07-2022 |

EPO FORM P0459

For more details about this annex : see Official Journal of the European Patent Office, No. 12/82